(19) Europäisches Patentamt
European Patent Office
Office européen des brevets

(11) **EP 2 256 981 B1**

(12) **EUROPEAN PATENT SPECIFICATION**

(45) Date of publication and mention
of the grant of the patent:
**04.06.2014 Bulletin 2014/23**

(51) Int Cl.:
*H04L 1/00* (2006.01)          *H04L 1/06* (2006.01)
*H04L 27/26* (2006.01)          *H04B 7/04* (2006.01)

(21) Application number: **10177017.0**

(22) Date of filing: **24.08.2000**

(54) **Communication device for receiving OFDM signals in a wireless communication system**

Kommunikationsvorrichtung zum Empfangen von OFDM-Signalen in einem drahtlosen
Kommunikationssystem

Système de communication pour la réception de signaux OFDM dans un système de communications
sans fil

(84) Designated Contracting States:
**DE FR GB**

(43) Date of publication of application:
**01.12.2010 Bulletin 2010/48**

(62) Document number(s) of the earlier application(s) in
accordance with Art. 76 EPC:
**08017501.1 / 2 031 788**
**07107461.1 / 1 821 480**
**00118418.3 / 1 182 817**

(73) Proprietor: **SONY DEUTSCHLAND GMBH**
**10785 Berlin (DE)**

(72) Inventor: **Izumi, Seiichi**
**70327 Stuttgart (DE)**

(74) Representative: **Keck, Stephan et al**
**Witte, Weller & Partner**
**Patentanwälte mbB**
**Phoenixbau**
**Königstraße 5**
**70173 Stuttgart (DE)**

(56) References cited:
**EP-A- 0 881 782     EP-A- 0 940 934**
**EP-A2- 0 844 765**

**Description**

The present invention relates to a communication device for receiving and transmitting OFDM signals in a wireless communication system.

In wireless OFDM communication systems a communication device, as e.g. a base station, communicates with another communication device, as e.g. a mobile terminal, over a wireless communication link using OFDM signals. OFDM (orthogonal frequency division multiplex) is a multi carrier modulation method wherein information to be transmitted is mapped (e.g. by phase shift keying) onto a plurality of orthogonal subcarriers signals of different frequencies which are subsequently combined into an OFDM signal. Each subcarrier frequency defines a transmission channel in which information can be transmitted over the communication link. For more background information on OFDM it is referred, for example, to K. David, T. Benkner: "Digitale Mobilfunksysteme", B.G. Teubner Stuttgart, 1996, S. 174-176.

The communication link causes undesired level fluctuations and distortion of the transmitted OFDM signal, e.g. due to fast fading or delay spread. Diversity methods can alleviate the adverse effects of fading. Using a plurality of antenna elements spaced apart at a certain minimum distance allows, by suitably combining reception signals received by the various antenna elements, to reliably recover the baseband information sent from another communication device even if fading occurs on one or more of the transmission paths across the communication link (receiver diversity). Transmitting one and the same transmission signal mutually delayed from several antenna elements allows to create a beam sharpened antenna pattern and to increase the received signal power at the receiver side (transmitter diversity). For more background information on receiver and transmitter diversity see, for example, EP 0 881 782 A2.

EP 0 940 934 A2 discloses a FDD forward link beam forming method for a FDD communications system.

EP 0 844 765 A2 discloses a multicarrier receiver with an antenna array.

In receiving OFDM signals by array antennas or any other diversity antennas, heavy amplitude fading may occur to the entire OFDM signal at one (or more) of the antenna elements of the diversity antenna. However, it has been found that often amplitude fading does not occur to all of the subcarrier signals of an OFDM signal to the same extent. In some cases it can be observed that only particular ones of the subcarrier signals are subject to amplitude fading while other subcarrier signals and possibly even the OFDM signal as a whole do not show any severe amplitude fading.

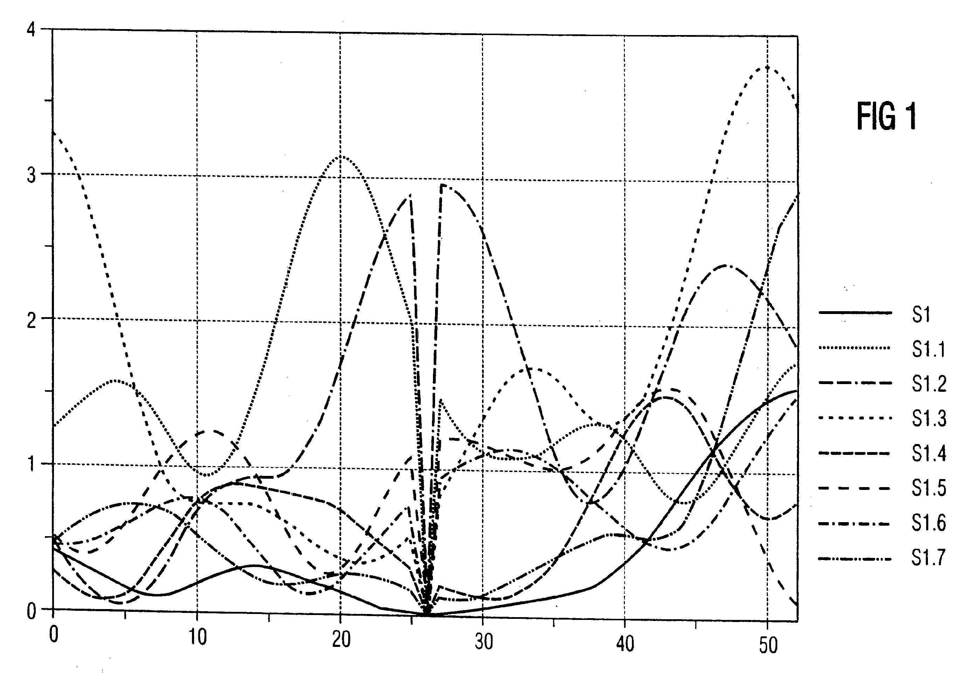

This can be seen in Fig. 1 which schematically shows an example for the frequency selectivity of fast fading. In Fig. 1, the horizontal abscissa indicates the subcarrier number n and the vertical ordinate indicates the signal amplitude A of the aligned preamble OFDM subcarriers, wherein eight antenna elements are positioned to form a circle. Note that the dip in the center is not due to any fading but to the fact that in the Bran Hiperlan2 approach being the base for the simulation the center subcarrier is not used. By assuring that there is no DC component in the baseband signal the demodulation complexity is reduced. However, figure 1 clearly shows a frequency selective fading which might appear depending on the application environment.

Having discovered these effects, it is the object of the present invention to reduce the energy consumption at the transmitter side by taking advantage of the above insight. Furthermore it is the object to optimize the signal energy at the receiving antenna on the same basis.

According to a first aspect, the invention provides a communication device for receiving transmitted OFDM signals in a wireless communication system as defined in claim 1.

The inventive solution takes benefit of the above observation (i.e. subcarrier dependence of amplitude fading) and reduces the amplitude of those subcarrier signals of the OFDM transmission signal at a particular antenna element which are expected to be subject to amplitude fading. As it is highly improbable for a transmission channel to be heavily disturbed at the same time at all antenna elements, amplitude reduction of a particular subcarrier signal being transmitted from one of the antenna elements will have - if at all - only negligible effect on the ability to reliably recover the information hidden in this particular subcarrier signal on the receiver side because the same subcarrier signal still will be transmitted from other antenna elements at normal or just slightly reduced amplitude. By giving a minor role to those subcarrier signals which, due to fading, will not reach the receiving communication device at a reasonable amplitude level, waste of useless energy can be avoided and signal interference caused by such useless energy at other receiving communication devices can be reduced. An evaluation as to which of the subcarrier signals of the OFDM transmission signal are likely to be subject to amplitude fading and therefore should be reduced in amplitude is done by examining an OFDM reception signal sent from the communication device intended to be addressee of the OFDM transmission signal. This signal examination is done individually for each antenna element.

According to a second aspect, the invention provides a method for operating a communication device for receiving transmitted OFDM signals in a wireless communication system as defined in claim 4.

The present invention is explained in more detail in the following description in relation to the enclosed drawings, in which:

Fig. 1 is a schematic graph showing the magnitude of the aligned preamble OFDM subcarriers as a function of the subcarrier number ,

Fig. 2 is a schematic block diagram of a communication device according to an embodiment of the present invention,

Fig. 3 schematically shows how a frequency domain channel estimation is performed within the communication device of Fig. 2, and

Fig. 4a through 4c schematically show the generation of a complex weight coefficient.

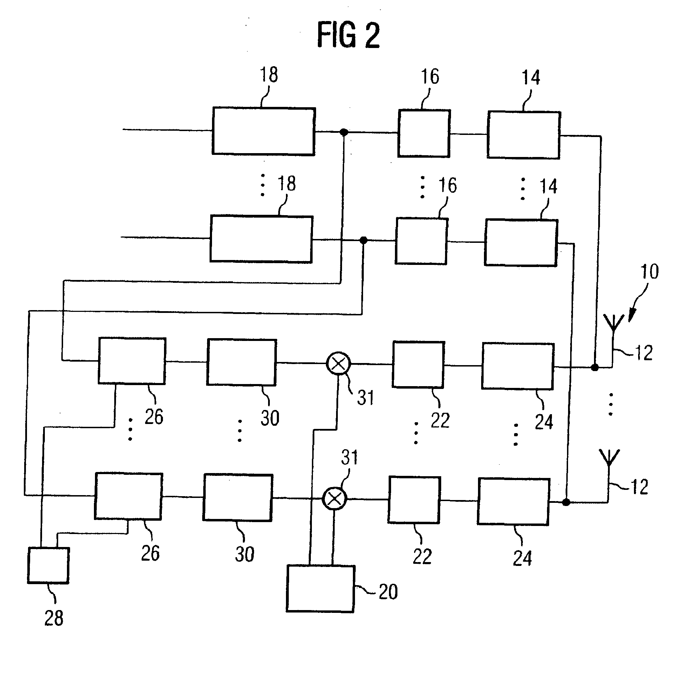

The communication device illustrated in Fig. 2 may be, for example, a base station or a mobile terminal of a wireless TDMA-TDD communication system employing a time division multiplex access (TDMA) and time division duplex (TDD) technique for OFDM signal communication between the various communication devices of the communication system. The communication device comprises all components necessary for processing received OFDM signals and generating OFDM signals to be transmitted. In particular, the communication device comprises a diversity antenna, e.g. an array antenna, generally designated by 10. The diversity antenna 10 is comprised of a plurality of mutually spaced antenna elements 12 only two of which are shown. An OFDM signal sent from a distant mobile terminal (not shown) or another type of communication device is received by each antenna element 12. In general, there will be a phase difference between the incoming OFDM signals at the different antenna elements 12. The received OFDM signals are individually processed by the communication device according to the present invention. Particularly, the received OFDM signals pass through down-conversion and analog-to-digital conversion means 14, Fast Fourier Transforming (FFT) means 16, demodulation means 18 and subsequent processing means (not shown in detail), such as a deinterleaver, a channel decoder and a voice codec, which allow to recover the baseband information transmitted from the remote station or terminal. At some point in the signal processing chain there will be provided combining means for combining the different received OFDM signals according to a suitably selected combining technique which is per se well-known in the art.

In case the communication device wants to transmit an OFDM transmission signal to the remote station or terminal, this OFDM transmission signal is generated by transmission signal generation means 20 (which include such functions as channel coding, interleaving and modulation) and is subsequently supplied to Inverse Fast Fourier Transforming (IFFT) means 22 and up-conversion and digital-to-analog conversion means 24. The OFDM transmission signal then is transmitted from each antenna element 12 with a phase difference from one antenna element 12 to the next. The phase difference at transmission is determined based on the phase relationship between the incoming signals at the different antenna elements 12 at signal reception, so as to enhance signal power at the remote station or terminal and to reduce signal power at other places.

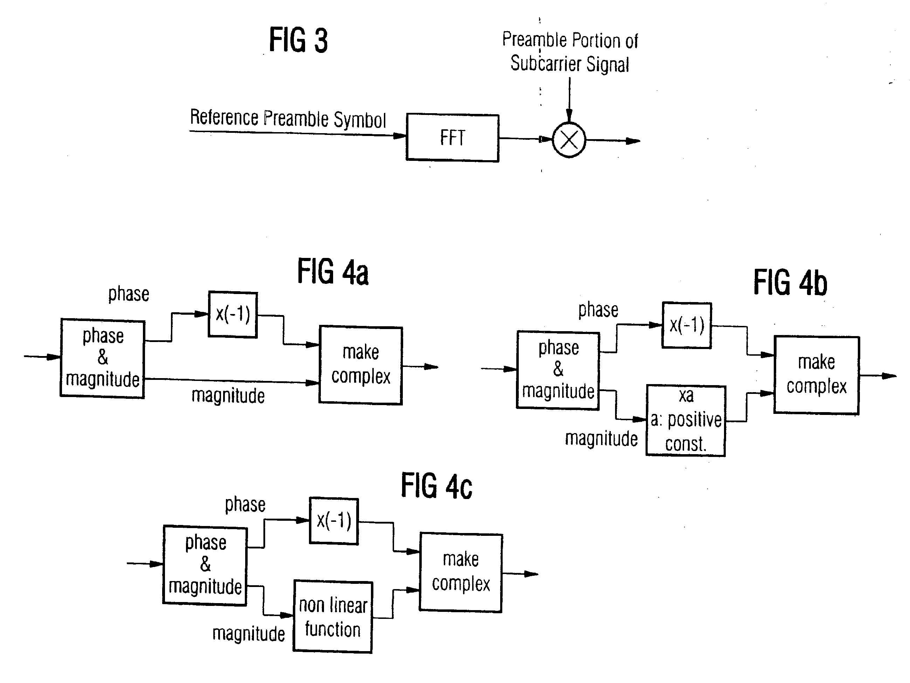

An OFDM signal is composed of a plurality of superposed subcarrier signals having different subcarrier frequencies. Channel estimation means 26 within the communication device according to the present invention determine an attenuation value for each subcarrier signal (better: for each transmission channel associated to a respective subcarrier frequency) of the received OFDM signal individually for each antenna element 12. The attenuation value gives a measure for the attenuation that the respective subcarrier signal was subjected to during its transmission from the remote station or terminal to the respective antenna element 12 of the communication device according to the present invention. Such attenuation may be caused e.g. by fast and slow fading. To determine the attenuation values, the channel estimation means 26 compare a preamble portion of at least one of the subcarrier signals with a known reference preamble symbol prestored in a memory 28. Particularly, the channel estimation means 26 compare the magnitudes of the preamble portion of the subcarrier signal and the Fourier transformed version of the reference preamble symbol and calculate a magnitude ratio (see Fig. 3). If necessary, the channel estimation means 26 perform a phase alignment of the preamble portion of the subcarrier signal with regard to the reference preamble symbol before carrying out the magnitude comparison.

Preferably, the channel estimation means 26 calculate the magnitude ratio only for a limited number of subcarrier signals out of the total number of subcarrier signals making up the OFDM reception signal at a respective one of the antenna elements 12. The channel estimation means 26 then determine the attenuation values for the remaining subcarrier signals from the calculated magnitude ratios by estimation, e.g. by interpolation or filtering. In this way, attenuation values for every transmission channel associated to a respective one of the antenna elements 12 can be obtained. However, it is to be understood that the channel estimation means 26 may be adapted to calculate the magnitude ratio for all of the subcarrier signals.

The channel estimation means 26 supply the attenuation values thus determined to signal adjustment means 30 which determine for each attenuation value a corresponding amplitude adjustment factor. Thus, an amplitude adjustment factor is determined in relation to each transmission channel associated to a respective antenna element 12. Each amplitude adjustment factor is applied, at a multiplication point 30, to the respective subcarrier signal of the OFDM transmission signal to be transmitted from the respective antenna element 12. In this way, the amplitudes of the subcarrier signals of the OFDM transmission signal are individually adjusted according to the attenuation conditions of the corresponding transmission channel. Particularly, the amplitude adjustment is such that a lower attenuation value results in a higher corresponding amplitude adjustment factor and thus in a higher amplitude of the corresponding subcarrier signal at the respective antenna element 12, and vice versa. There may be chosen a linear relationship between the magnitude ratio determined in relation to a particular transmission channel and the corresponding amplitude adjustment factor. Alternatively, a non-linear relationship may be chosen for this relationship. For example, the relationship may be chosen such that, when the magnitude ratio is below a predetermined threshold, the corresponding subcarrier signal at the respective antenna element 12 is suppressed. And if the magnitude ratio is above the threshold, the corresponding subcarrier signal is given a predetermined constant amplitude. In general, the choice of a suitable relationship between the magnitude ratio (i.e. the attenuation value) and the amplitude adjustment factor will be readily available to a person skilled in the art.

The above amplitude adjustment which, if necessary, is performed for each antenna element 12 individually on each subcarrier signal to be transmitted from the respective antenna element 12 allows to avoid transmission of useless energy on those transmission channels which have proved to be heavily disturbed by amplitude fading, thereby reducing power consumption of the communication device itself and liability to interference at other receiving communication devices due to transmission of meaningless energy.

The channel estimation means 26 may further determine, individually for each transmission channel of each antenna element 12, a phase difference value representative of the phase shift that the corresponding received subcarrier signal was subjected to during its transmission from the remote station or terminal to the respective antenna element 12 of the communication device according to the present invention. To this end, the channel estimation means 26 may determine the relative phase difference between the preamble portion of the respective subcarrier signal and the prestored reference preamble symbol mentioned above. Again, the channel estimation means 26 may calculate the relative phase difference individually for every subcarrier signal, or only for a selected group of subcarrier signals followed by an estimation process for the remaining subcarrier signals. From the phase difference values thus determined by the channel estimation means 26 the signal adjustment means 30 then determine suitable phase adjustment factors to be applied to the subcarrier signals of the OFDM transmission signal, so as compensate for the relative phase shifts that occur to the subcarrier signals transmitted from the different antenna elements 12 on their way to the remote station or terminal.

The amplitude adjustment factor and the phase adjustment factor for a particular subcarrier signal associated to a particular antenna element 12 may be represented by a complex weight coefficient which is applied to the respective transmission subcarrier signal. Figs. 4a to 4c show three possibilities for generating the weight coefficient. In all three cases, the phase of the weight coefficient equals the phase determined by the channel estimation means 26 for the corresponding received subcarrier signal but has opposite sign. The magnitude of the weight coefficient can be equal (Fig. 4a) or proportional (Fig. 4b) to the subcarrier magnitude determined by the channel estimation means 26. Alternatively, the magnitude of the weight coefficient can be the result of a non-linear function, such as a threshold or square function, which has the subcarrier magnitude determined by the channel estimation means 26 as its input (Fig. 4c).

One of the objects of the present invention is to reduce unnecessary energy consumption at the transmitter. Furthermore, as will be shown in the following on the basis of a mathematical representation, the energy at the receiving antenna can be maximized when applying the concept of the present invention.

To maximize the total OFDM signal energy at the receiver, the amplitude ratio and phase at each transmitter antenna should be optimized. Now, we think about the $j^{th}$ subcarrier. M OFDM signals coming from M different transmitter antennas. They are already weighted by value $w_{jk}$. The combined signal can be written like

$$\sum_{k=0}^{M-1} a_{jk} w_{jk}^{*}$$

Here, "*" is conjugate. $a_{jk}$ is complex channel expression of $j^{th}$ subcarrier of OFDM signal comes from $k^{th}$ antenna. In vector expression, combined OFDM signal can be written as

$$a_j w_j^{'}$$

where $a_j = [a_{j0}, a_{j1}, ..., a_{jM}]$ is channel vector and $w_j = [w_{j0}, w_{j1}, ..., w_{jM}]$ is weight vector for $j^{th}$ subcarrier. Here, "'" is Hermitian transpose (conjugate transpose).

Power of combined signal will be

$$\left(a_j w_j^{\cdot}\right)^2 = \left(a_j w_j^{\cdot}\right)^{'}\left(a_j w_j^{\cdot}\right) = \left(w_j a_j^{'}\right)\left(a_j w_j^{\cdot}\right) = w_j A_j w_j^{\cdot}$$

The matrix A is a Hermitian matrix defined as

$$A_j = a_j^{'} a_j = \begin{bmatrix} a_{j0}^{\bullet} \\ a_{jM}^{\bullet} \end{bmatrix}\begin{bmatrix} a_{j0} a_{jM} \end{bmatrix}$$

To maximize combined $j^{th}$ subcarrier of OFDM signal, it is said that weight vector, $w_j$, should be chosen to proportional of Eigenvector of maximum Eigenvalue of the matrix $A_j$.

In the other hand, any Hermitian matrix H can be expressed like

$$H = \sum_j \lambda_j v_j^{'} v_j$$

where $\lambda$ is Eigenvalue and $v$ is Eigenvector. If the expression of the matrix $A_j$ is compared with this expression of Hermitian matrix H, it can be seen that the matrix $A_j$ has only one Eigenvalue which is not zero, naturally maximum Eigenvalue, and its eigenvector is $a_j$. Eigenvalue of the matrix $A_j$ is inner product of $a_j a_j$ and Eigenvector is usually normalized like $a_j/(a_j a_j^*)^{1/2}$.

Again, to maximize the combined $j^{th}$ subcarrier of OFDM signal, weight vector, $w_j$, should be proportional to vector $a_j$.

For other subcarriers, set of complex channel expression of each channel (antenna), channel vector, shall be weighting vector. Complex channel expression of each antenna and subcarrier is known at channel estimation method.

(Normalization of weight vector is not necessary, because ratio between antennas and subcarriers are important.)

## Claims

1. A communication device for receiving transmitted orthogonal frequency division multiplexed, OFDM, signals in a wireless communication system, the communication device comprising:

   means (10) for receiving a plurality of OFDM signals transmitted by a plurality of transmission antennas via a plurality of transmission channels in said wireless communication system, wherein each of said plurality of OFDM signals comprises a plurality of subcarrier signals;
   means (26) for performing channel estimation processing and decoding processing on said plurality of received OFDM signals; and
   means (30) for weighting said plurality of received OFDM signals by weight vectors chosen to improve a performance of said plurality of received OFDM signals expressed by elements of said weight vectors and channel vectors,
   wherein the performance of said plurality of received OFDM signals is expressed by the elements of said weight vectors and a Hermitian matrix having elements of channel vectors, wherein the weight and channel vectors consist of complex weight coefficients and channel expressions, for the same subcarrier of each transmission antenna, respectively, and
   wherein the means (30) for weighting chooses weight vectors based on an Eigenvector of an Eigenvalue of said Hermitian matrix.

2. The communication device of claim 1,
   wherein the means (30) for weighting weighs each of said plurality of OFDM signals individually by weight vectors chosen to improve a performance of each of said plurality of received OFDM signals.

3. The communication device of claim 1 or 2,

wherein said Eigenvalue of said Hermitian matrix is a maximum Eigenvalue of said Hermitian matrix.

4. A method performed by a communication device for receiving transmitted orthogonal frequency division multiplexed, OFDM, signals in a wireless communication system, the method comprising:

receiving, at a plurality of antenna elements of the communication device, a plurality of OFDM signals transmitted by a plurality of transmission antennas via a plurality of transmission channels in said wireless communication system,
wherein each of said plurality of OFDM signals comprise a plurality of subcarrier signals;
performing, at a processor of said communication device, channel estimation processing and decoding processing on said plurality of received OFDM signals; and
weighting said plurality of received OFDM signals by weight vectors chosen to improve a performance of said plurality of received OFDM signals expressed by elements of said weight vectors and channel vectors,
wherein the performance of said plurality of received OFDM signals is expressed by the elements of said weight vectors and a Hermitial matrix having elements of channel vectors, wherein the weight and channel vectors consist of complex weight coefficients and channel expressions, for the same subcarrier of each transmission antenna, respectively, and
wherein the weight vectors are chosen based on an Eigenvector of an Eigenvalue of said Hermitian matrix.

5. The method of claim 4,
wherein the weighing includes weighing each of said plurality of OFDM signals individually by weight vectors chosen to improve a performance of each of said plurality of received OFDM signals.

6. The method of claim 4 or 5,
wherein said Eigenvalue of said Hermitian matrix is a maximum Eigenvalue of said Hermitian matrix.

**Patentansprüche**

1. Kommunikationsvorrichtung zum Empfangen gesendeter Orthogonalfrequenzteilungsmultiplex-Signalen, OFDM-Signalen, in einem drahtlosen Kommunikationssystem, wobei die Kommunikationsvorrichtung Folgendes umfasst:

Mittel (10) zum Empfangen mehrerer OFDM-Signale, die von mehreren Sendeantennen über mehrere Übertragungskanäle in dem drahtlosen Kommunikationssystem gesendet werden, wobei jedes der mehreren OFDM-Signale mehrere Unterträgersignale enthält;
Mittel (26) zum Ausführen einer Kanalschätzverarbeitung und einer Decodierungsverarbeitung an den mehreren empfangenen OFDM-Signalen; und
Mittel (30) zum Gewichten der mehreren empfangenen OFDM-Signale durch Gewichtungsvektoren, die gewählt werden, um eine Leistung der mehreren empfangenen OFDM-Signale, die durch Elemente der Gewichtsvektoren und durch Kanalvektoren ausgedrückt wird, zu verbessern,
wobei die Leistung der mehreren empfangenen OFDM-Signale durch die Elemente der Gewichtsvektoren und eine Hermitesche Matrix, die Elemente von Kanalvektoren besitzt, ausgedrückt werden, wobei die Gewichts- und Kanalvektoren aus komplexen Gewichtungskoeffizienten bzw. Kanalausdrücken für denselben Unterträger jeder Sendeantenne bestehen, und
wobei die Mittel (30) zum Gewichten Gewichtsvektoren anhand eines Eigenvektors eines Eigenwertes der Hermiteschen Matrix wählen.

2. Kommunikationsvorrichtung nach Anspruch 1,
wobei die Mittel (30) zum Gewichten jedes der mehreren OFDM-Signale individuell durch Gewichtungsvektoren gewichtet, die gewählt werden, um eine Leistung jedes der mehreren empfangenen OFDM-Signale zu verbessern.

3. Kommunikationsvorrichtung nach Anspruch 1 oder 2,
wobei der Eigenwert der Hermiteschen Matrix ein maximaler Eigenwert der Hermiteschen Matrix ist.

4. Verfahren, das durch eine Kommunikationsvorrichtung ausgeführt wird, um gesendete Orthogonalfrequenzteilungsmultiplex-Signale, OFDM-Signale, in einem drahtlosen Kommunikationssystem zu empfangen, wobei das Verfahren Folgendes umfasst:

Empfangen bei mehreren Antennenelementen der Kommunikationsvorrichtung mehrerer OFDM-Signale, die durch mehrere Sendeantennen über mehrere Übertragungskanäle in dem drahtlosen Kommunikationsnetz gesendet werden,

wobei jedes der mehreren OFDM-Signale mehrere Unterträgersignale enthält;

Ausführen bei einem Prozessor der Kommunikationsvorrichtung einer Kanalschätzverarbeitung und einer Decodierungsverarbeitung an den mehreren empfangenen OFDM-Signalen; und

Gewichten der mehreren empfangenen OFDM-Signale durch Gewichtungsvektoren, die gewählt werden, um eine Leistung der mehreren empfangenen OFDM-Signale zu verbessern, die durch Elemente der Gewichtsvektoren und durch Kanalvektoren ausgedrückt wird,

wobei die Leistung der mehreren empfangenen OFDM-Signale durch die Elemente der Gewichtsvektoren und eine Hermitesche Matrix, die Elemente von Kanalvektoren besitzt, ausgedrückt wird, wobei die Gewichts- und Kanalvektoren aus komplexen Gewichtungskoeffizienten bzw. Kanalausdrücken für denselben Unterträger jeder Sendeantenne bestehen, und

wobei die Gewichtsvektoren anhand eines Eigenvektors eines Eigenwerts de Hermiteschen Matrix gewählt werden.

**5.** Verfahren nach Anspruch 4,
wobei das Gewichten das individuelle Gewichten jedes der mehreren OFDM-Signale durch Gewichtsvektoren, die gewählt werden, um eine Leistung jedes der mehreren empfangenen OFDM-Signale zu verbessern, umfasst.

**6.** Verfahren nach Anspruch 4 oder 5,
wobei der Eigenwert der Hermiteschen Matrix ein maximaler Eigenwert der Hermiteschen Matrix ist.

## Revendications

**1.** Dispositif de communication pour recevoir des signaux multiplexés par répartition orthogonale de la fréquence, OFDM, transmis dans un système de communication sans fil, le dispositif de communication comprenant :

un moyen (10) pour recevoir une pluralité de signaux OFDM transmis par une pluralité d'antennes de transmission via une pluralité de canaux de transmission dans ledit système de communication sans fil, où chacun de ladite pluralité de signaux OFDM comprend une pluralité de signaux de sous-porteuses ;

un moyen (26) pour exécuter un traitement d'estimation de canal et un traitement de décodage sur ladite pluralité de signaux OFDM reçus ; et

un moyen (30) pour pondérer ladite pluralité de signaux OFDM reçus par l'intermédiaire de vecteurs de pondération choisis pour améliorer une performance de ladite pluralité de signaux OFDM reçus exprimée par des éléments desdits vecteurs de pondération et vecteurs de canal, où la performance de ladite pluralité des signaux OFDM reçus est exprimée par les éléments desdits vecteurs de pondération et une matrice hermitienne ayant des éléments de vecteurs de canal ; où les vecteurs de pondération et de canal consistent en des coefficients de pondération complexes et des expressions de canal, pour la même sous-porteuse de chaque antenne de transmission, respectivement, et

où le moyen (30) pour pondérer choisit des vecteurs de pondération sur la base d'un vecteur propre d'une valeur propre de ladite matrice hermitienne.

**2.** Dispositif de communication selon la revendication 1,
dans lequel le moyen (30) pour pondérer, pondère chacun de ladite pluralité des signaux OFDM, individuellement, par l'intermédiaire de vecteurs de pondération choisis pour améliorer une performance de chacun de ladite pluralité de signaux OFDM reçus.

**3.** Dispositif de communication selon la revendication 1 ou la revendication 2,
dans lequel ladite valeur propre de ladite matrice hermitienne est une valeur propre maximum de ladite matrice hermitienne.

**4.** Procédé exécuté par un dispositif de communication pour recevoir des signaux multiplexés par répartition orthogonale de la fréquence, OFDM, transmis dans un système de communication sans fil, le procédé comprenant les étapes suivantes :

recevoir, au niveau d'une pluralité d'éléments d'antenne du dispositif de communication, une pluralité de signaux OFDM transmis par une pluralité d'antennes de transmission via une pluralité de canaux de transmission dans ledit système de communication sans fil, où chacun de ladite pluralité de signaux OFDM comprend une pluralité de signaux de sous-porteuses ;

exécuter, au niveau d'un processeur dudit dispositif de communication, un traitement d'estimation de canal et un traitement de décodage sur ladite pluralité de signaux OFDM reçus ; et pondérer ladite pluralité de signaux OFDM reçus par l'intermédiaire de vecteurs de pondération choisis pour améliorer une performance de ladite pluralité de signaux OFDM reçus, exprimée par des éléments desdits vecteurs de pondération et vecteurs de canal,

où l'exécution de ladite pluralité de signaux OFDM reçus est exprimée par les éléments desdits vecteurs de pondération et une matrice hermitienne ayant des éléments de vecteurs de canal, où les vecteurs de pondération et de canal consistent en des coefficients de pondération complexes et des expressions de canal, pour la même sous-porteuse de chaque antenne de transmission, respectivement, et

où les vecteurs de pondération sont choisis sur la base d'un vecteur propre d'une valeur propre de ladite matrice hermitienne.

5. Procédé selon la revendication 4,
   dans lequel la pondération comprend de pondérer chacun de ladite pluralité de signaux OFDM, individuellement, par l'intermédiaire de vecteurs de pondération choisis pour améliorer une performance de chacun de ladite pluralité de signaux OFDM reçus.

6. Procédé selon la revendication 4 ou la revendication 5,
   dans lequel ladite valeur propre de ladite matrice hermitienne est une valeur propre maximum de ladite matrice hermitienne.

FIG 1

EP 2 256 981 B1

# FIG 2

# FIG 3

Preamble Portion of
Subcarrier Signal

Reference Preamble Symbol ⟶ [ FFT ] ⟶ ⊗ ⟶

# FIG 4a

phase

[ phase & magnitude ] ⟶ phase ⟶ [ x(-1) ] ⟶ [ make complex ] ⟶

magnitude

# FIG 4b

phase

[ phase & magnitude ] ⟶ phase ⟶ [ x(-1) ] ⟶ [ make complex ] ⟶

magnitude ⟶ [ xa  a: positive const. ]

# FIG 4c

phase

[ phase & magnitude ] ⟶ phase ⟶ [ x(-1) ] ⟶ [ make complex ] ⟶

magnitude ⟶ [ non linear function ]

EP 2 256 981 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0881782 A2
- EP 0940934 A2

- EP 0844765 A2

**Non-patent literature cited in the description**

- **K. DAVID ; T. BENKNER.** Digitale Mobilfunksysteme. *B.G. Teubner Stuttgart,* 1996, 174-176